# EUROPEAN PATENT SPECIFICATION

(11) **EP 2 799 710 B1**
(45) Date of publication and mention of the grant of the patent: **07.09.2016**
(21) Application number: 14166097.7
(22) Date of filing: 25.04.2014
(51) Int. Cl.: F01D 5/02, F03D 1/06

(54) **Rotor blade assembly having vortex generators for wind turbine**
Rotorblattanordnung mit Wirbelerzeugern für Windturbine
Ensemble de pale de rotor comportant des générateurs de tourbillons pour éolienne

(30) Priority: 03.05.2013 IN DE13132013
(43) Date of publication of application: 05.11.2014
(73) Proprietor: General Electric Company, Schenectady, NY 12345 (US)
(72) Inventor: Wilson, Megan Michela, Greenville, SC 29615-4614 (US); Herr, Stefan, Greenville, SC 29615 (US); Vedula, Ramesh, 560066 Bangalore (IN); Luedke, Jonathan Glenn, Greenville, SC 29615 (US)
(74) Representative: Bedford, Grant Richard

(56) References cited:
- EP-A1- 2 548 801
- WO-A1-01/16482
- WO-A1-2007/140771
- WO-A2-2008/113350
- US-A1- 2010 143 144
- US-A1- 2011 223 022

## Description

The present disclosure relates in general to wind turbines, and more specifically to rotor blade assemblies therefor which include vortex generators.

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

Rotor blades are the primary elements of wind turbines for converting wind energy into electrical energy. The blades have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is geared to the generator for producing electricity.

The lift force is generated when the flow from the leading edge to the trailing edge creates a pressure difference between the top and bottom surfaces of the blade. Ideally, the flow is attached to the top surface from the leading edge to the trailing edge. However, when the angle of attack of the flow exceeds a certain critical angle, the flow does not reach the trailing edge, but leaves the surface at a flow separation line. Beyond this line, the flow direction is generally reversed, i.e. it flows from the trailing edge backward to the separation line. A blade section extracts much less energy from the flow when it separates.

Flow separation depends on a number of factors, such as incoming air flow characteristics (e.g. Reynolds number, wind speed, in-flow atmospheric turbulence) and characteristics of the blade (e.g. airfoil sections, blade chord and thickness, twist distribution, pitch angle, etc). The detached-flow region also leads to an increase in drag force, mainly due to a pressure difference between the upstream attached-flow region and the downstream detached-flow region. Flow separation tends to be more prevalent nearer the blade root due to the relatively great angle of attack of the blade flow surfaces in this region as compared to the blade tip.

Hence, in order to increase the energy conversion efficiency during normal operation of the wind turbine, it is desired to increase the lift force of the blades while decreasing the drag force. To this purpose, it is advantageous to increase the attached-flow region and to eliminate or at least reduce the detached-flow region by moving flow separation nearer the trailing edge of the blade. This is particularly desirable nearer to the blade root in order to increase the overall lift generated by the blade.

It is known in the art to change the aerodynamic characteristics of wind turbine blades by adding dimples, protrusions, or other structures on the surface of the blade. These structures are often referred to as "vortex generators" and serve to create local regions of turbulent airflow over the surface of the blade as a means to delay flow separation and thus optimize aerodynamic airflow around the blade contour. Conventional vortex generators are typically sheet metal and defined as "fins" or shaped structures on the suction side of the turbine blade.

EP 2,548,801 discloses a wind turbine blade including a pressure side and a suction side, wherein the suction side of the wind turbine blade is provided with a plurality of vortex generators positioned along a mounting line having a proximal end point nearest the root end and a distal end point nearest the tip end, wherein the mounting line is a concave line seen from the trailing edge of the wind turbine blade.

WO 01/16482 discloses a blade for a wind turbine. To optimize operation, i.e. to prevent a fall in efficiency occurring, it is proposed for the blade, adjacent of its free end, to be provided with turbulence-generating generators.

Conventional vortex generators are not, however, without drawbacks. For example, improper placement and sizing of conventional vortex generators can lead to significant drag as well as ineffectiveness in maintaining and increasing the attached-flow region.

Accordingly, improved wind turbine rotor blades are desired in the art. In particular, rotor blades which utilize vortex generators having specific arrangements and/or sizing which increase attached-flow regions and thus overall wind turbine efficiency, would be advantageous.

According to the present invention, there is provided a rotor blade assembly as set out by claim 1, and a wind turbine as set out by claim 10.

Various aspects and advantages of the invention will be set forth in part in the following description, or may be clear from the description, or may be learned through practice of the invention.

In one example, a rotor blade assembly for a wind turbine is disclosed. The rotor blade assembly includes a rotor blade having exterior surfaces defining a pressure side, a suction side, a leading edge, and a trailing edge each extending between a tip and a root. The rotor blade further defines a span and a chord. The rotor blade assembly further includes a plurality of vortex generators configured on at least one of the suction side or the pressure side and disposed within an inboard area of the rotor blade. The plurality of vortex generators include a row of vortex generators extending in a generally span-wise direction, the row comprising a first portion of vortex generators and and a second portion of vortex generators, the second portion of vortex generators spaced apart from the first portion of vortex generators in the span-wise direction. Each first portion vortex generator is disposed at a first chord-wise location, and each second portion vortex generator is disposed at a second chord-wise location different from the first chord-wise location.

In another example, a vortex generator assembly for a wind turbine rotor blade is disclosed. The vortex generator assembly includes a plurality of vortex generators arranged in a single row and configured for mounting on at least one of a suction side or a pressure side of the wind turbine rotor blade. The plurality of vortex generators comprises a first portion of vortex generators and a second portion of vortex generators. The second portion of vortex generators is arranged to be spaced apart from the first portion of vortex generators in a span-wise direction. Each first portion vortex generator is arranged to be disposed at a first chord-wise location, and each second portion vortex generator is arranged to be disposed at a second chord-wise location different from the first chord-wise location.

In another example, a rotor blade assembly for a wind turbine is disclosed. The rotor blade assembly includes a rotor blade having exterior surfaces defining a pressure side, a suction side, a leading edge, and a trailing edge each extending between a tip and a root. The rotor blade further defines a span and a chord. The rotor blade assembly further includes at least one vortex generator configured on at least one of the suction side or the pressure side of the rotor blade, the at least one vortex generator having an aspect ratio between approximately 4 and approximately 10.

In another example, a rotor blade assembly for a wind turbine is disclosed. The rotor blade assembly includes a rotor blade having exterior surfaces defining a pressure side, a suction side, a leading edge, and a trailing edge each extending between a tip and a root. The rotor blade further defines a span and a chord. The rotor blade assembly further includes at least one vortex generator configured on at least one of the suction side or the pressure side of the rotor blade, the at least one vortex generator having a length between approximately 4% and approximately 20% of a local chord.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 is a side view of a wind turbine according to one embodiment of the present disclosure;
FIG. 2 is a top view of a rotor blade assembly according to one embodiment of the present disclosure;
FIG. 3 is an enlarged view of an inboard portion of the rotor blade assembly of FIG. 2;
FIG. 4 is an enlarged view of an inboard portion of a rotor blade assembly in accordance with another embodiment of the present disclosure;
FIG. 5 is a cross-sectional view of a rotor blade assembly, along the lines 5-5 as shown in FIG. 2, in accordance with one embodiment of the present disclosure;
FIG. 6 is a cross-sectional view of a rotor blade assembly, along the lines 6-6 as shown in FIG. 2, in accordance with one embodiment of the present disclosure;
FIG. 7 is an enlarged view of an inboard portion of a rotor blade assembly in accordance with another embodiment of the present disclosure;
FIG. 8 is a cross-sectional view of a rotor blade assembly, along the lines 8-8 as shown in FIG. 7, in accordance with one embodiment of the present disclosure;
FIG. 9 is an enlarged view of an inboard portion of a rotor blade assembly in accordance with another embodiment of the present disclosure;
FIG. 10 is a cross-sectional view of a rotor blade assembly, along the lines 10-10 as shown in FIG. 9, in accordance with one embodiment of the present disclosure; and
FIG. 11 is an enlarged view of an inboard portion of a rotor blade assembly in accordance with another embodiment of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

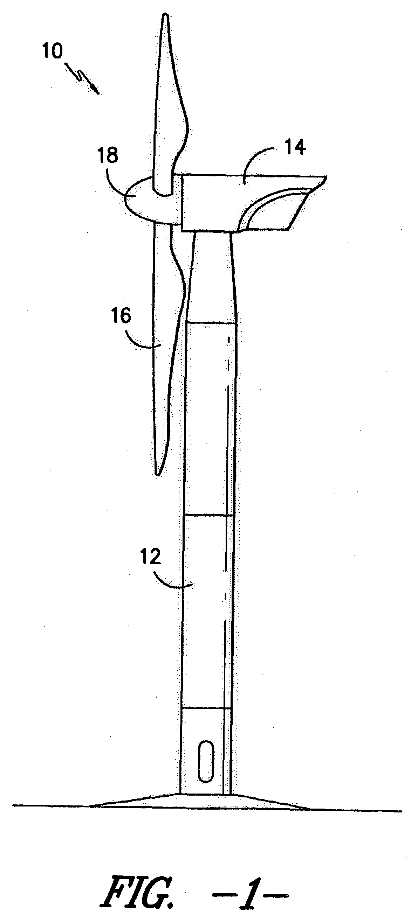

FIG. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration.

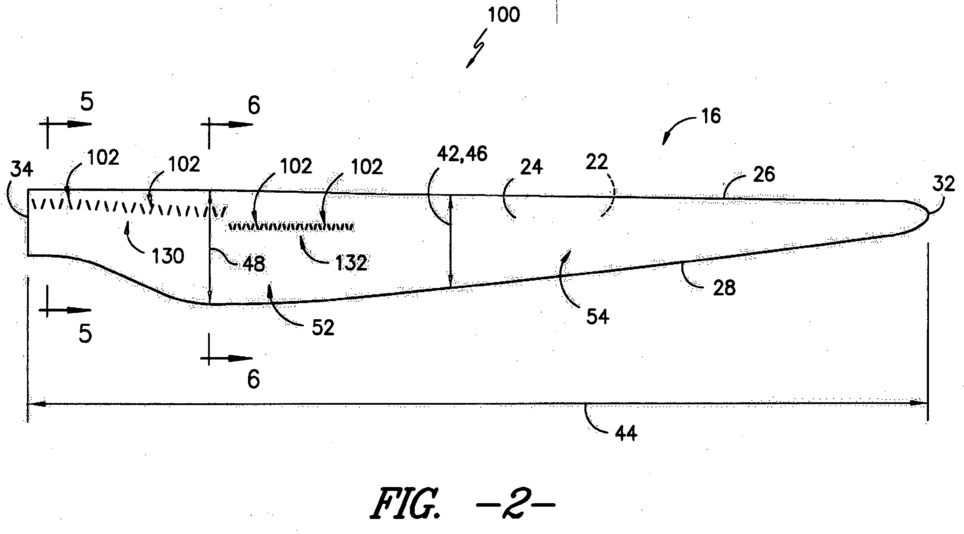

Referring now to FIG. 2, a rotor blade 16 according to the present disclosure `may include exterior surfaces defining a pressure side 22 and a suction side 24 extending between a leading edge 26 and a trailing edge 28. These surfaces may extend from a blade tip 32 to a blade root 34. The exterior surfaces may be generally aerodynamic surfaces having generally aerodynamic contours, as is generally known in the art.

In some embodiments, the rotor blade 16 may include a plurality of individual blade segments aligned in an end-to-end order from the blade tip 32 to the blade root 34. Each of the individual blade segments may be uniquely configured so that the plurality of blade segments define a complete rotor blade 16 having a designed aerodynamic profile, length, and other desired characteristics. For example, each of the blade segments may have an aerodynamic profile that corresponds to the aerodynamic profile of adjacent blade segments. Thus, the aerodynamic profiles of the blade segments may form a continuous aerodynamic profile of the rotor blade 16. Alternatively, the rotor blade 16 may be formed as a singular, unitary blade having the designed aerodynamic profile, length, and other desired characteristics.

The rotor blade 16 may, in exemplary embodiments, be curved. Curving of the rotor blade 16 may entail bending the rotor blade 16 in a generally flapwise direction and/or in a generally edgewise direction. The flapwise direction may generally be construed as the direction (or the opposite direction) in which the aerodynamic lift acts on the rotor blade 16. The edgewise direction is generally perpendicular to the flapwise direction. Flapwise curvature of the rotor blade 16 is also known as pre-bend, while edgewise curvature is also known as sweep. Thus, a curved rotor blade 16 may be pre-bent and/or swept. Curving may enable the rotor blade 16 to better withstand flapwise and edgewise loads during operation of the wind turbine 10, and may further provide clearance for the rotor blade 16 from the tower 12 during operation of the wind turbine 10.

The rotor blade 16 may further define chord 42 and a span 44. As shown in FIG. 2, the chord 42 may vary throughout the span 44 of the rotor blade 16. Thus, a local chord 46 may be defined for the rotor blade 16 at any point on the rotor blade 16 along the span 44. Further, a maximum chord 48 may be defined at a predetermined span-wise location on the rotor blade 16.

Additionally, the rotor blade 16 may define an inboard area 52 and an outboard area 54. The inboard area 52 may be a span-wise portion of the rotor blade 16 extending from the root 34. For example, the inboard area 52 may, in some embodiments, include approximately 25%, 33%, 40%, 50%, 60%, 67%, 75% or any percentage or range of percentages therebetween, or any other suitable percentage or range of percentages, of the span 44 from the root 34. The outboard area 54 may be a span-wise portion of the rotor blade 16 extending from the tip 32, and may in some embodiments include the remaining portion of the rotor blade 16 between the inboard area 52 and the tip 32. Additionally or alternatively, the outboard area 54 may, in some embodiments, include approximately 25% 33%, 40%, 50%, 60%, 67%, 75% or any percentage or range of percentages therebetween, or any other suitable percentage or range of percentages, of the span 44 from the tip 32.

As illustrated in FIGS. 2 through 10, the present disclosure may further be directed to one or more rotor blade assemblies 100. A rotor blade assembly 100 according to the present disclosure generally includes a rotor blade 16. Further, a rotor blade assembly 100 includes one or more vortex generators 102. Each vortex generator 102 is configured on a surface of the rotor blade 16. For example, in the embodiment illustrated in the figures, the vortex generators 102 are depicted on the suction side 24. It should be appreciated that the vortex generators 102 could also be provided on the pressure side 22.

Vortex generators 102 can be configured on a surface of the rotor blade 16 through any suitable mounting technique or apparatus. For example, suitable adhesives can be utilized to bond a vortex generator 102 to a surface of the rotor blade 16. Alternatively, suitable mechanical fasteners, such as nails, screws, rivets, nut-bolt combinations, etc., can be utilized to attach a vortex generator 102 to a surface of the rotor blade 16. Still further, in other alternative embodiments, welding, brazing, or other suitable techniques can be utilized to connect a vortex generator 102 to a surface of the rotor blade 16. Additionally, in some embodiments (not shown) a vortex generator 102 may include a mounting plate for mounting of the vortex generator 102 to a surface of the rotor blade 16.

Any suitable vortex generators 102 are within the scope and spirit of the present disclosure. In exemplary embodiments, as shown in the figures, a vortex generator 102 includes a fin 110. The fin 110 may be configured on a rotor blade 16 surface such that it extends therefrom, thus defining a height 112 (such as a maximum height). The fin 110 may further define a length 114 (such as a maximum length) as shown, which may be defined between a forward end 116 and an aft end 118. In exemplary embodiments as shown, the fin 110 may extend generally linearly between the forward end 116 and the aft end 118, although in alternative embodiments the fin 110 may so extend in a generally curvilinear fashion or otherwise. Further, the fin 110 may have any suitable cross-sectional shape. For example, in some embodiments, a fin 110 may have a square or rectangular cross-sectional shape. In other embodiments, the fin 110 may have a trapezoidal cross-sectional shape, with the sidewalls tapering inwards from a bottom of the fin to a top of the fin or, alternatively, tapering outwards. In other embodiments, only portions of the sidewalls of a fin 110 may taper. In still other embodiments, a fin 110 may have an oval, triangular, or other suitable polygonal shaped cross-section.

A vortex generator 102 may further be configured on a rotor blade 16 at any suitable orientation. For example, a vortex generator 102 may be aligned with a local chord 46, such that for example, a length 114 thereof is parallel to the local chord 46, or a vortex generator 102 may be angled to the local chord 46. FIGS. 2 through 4, 7 and 8 illustrate angled vortex generators 102. In these embodiments, each fin 110 as shown is oriented at an angle to the local chord 46. A fin 110 may be oriented in some embodiments, for example, at an angle between approximately 10 degrees and approximately 30 degrees to the local chord 46, such as in some embodiments approximately 20 degrees. As further shown, alternating fins 110 may be oriented in opposite directions, such that pairs of fins 110 together generally form wedge-shaped structures. For example, as illustrated a first fin 110 of a pair of fins may be oriented at an angle 120 to the local chord 46. A neighboring second fin 1 I 0 that together with the first fin 110 forms a pair may be oriented at an opposite angle 122 to the local chord 46. Both angles 120, 122 in exemplary embodiments may be between approximately 10 degrees and approximately 30 degrees to the local chord 46, such as in some embodiments approximately 20 degrees. It should be understood, however, that fins 110 or other suitable vortex generators 102 having any suitable orientations are within the scope of the present disclosure.

Vortex generators 102 according to the present disclosure are oriented and/or sized to advantageously increase the overall performance and efficiency of the rotor blade assembly 100 and wind turbine 10 in general. The present inventors have discovered that conventional vortex generators are relatively inefficient and, in some cases, adversely affect the performance of rotor blade assemblies 100. Further, the present inventors have discovered that particular orientations and/or sizing of vortex generators 102 as discussed herein advantageously increase rotor blade assembly 100 and wind turbine 10 performance and efficiency, in some cases surprisingly increasing wind turbine efficiency by 1-2%.

For example, FIGS. 2 through 4 illustrate particular orientations of vortex generators 102 according to the present disclosure. In particular, a single row of vortex generators 102 is illustrated. The single row extends generally in the span-wise direction. Further, the row includes a first portion 130 of vortex generators 102 and a second portion 132 of vortex generators 102. Each portion 130, 132 extends generally in the span-wise direction, as shown. The second portion 132 is offset from the first portion 130 in both the span-wise and chord-wise directions. Thus, as shown, the second portion 132 is spaced apart from the first portion 130 in the span-wise direction, such that each second portion 132 vortex generator 102 is relatively outboard of each first portion 130 vortex generator 102. Additionally, as shown, the second portion 132 is spaced apart from the first portion 130 in the chord-wise direction, such that each second portion 132 vortex generator 102 is relatively downstream of each first portion 130 vortex generator 102. Further, each first portion 130 vortex generator 102 is disposed at a first chord-wise location, and each second portion 132 vortex generator 102 is disposed at a second chord-wise location. The second chord-wise location is, as shown, different from the first chord-wise location. The orientation of the vortex generators at different chord-wise locations as provided herein may advantageously improve the performance and efficiency of the rotor blade assembly 100 and wind turbine 10 in general.

It should be noted that span-wise and chord-wise locations according to the present disclosure are determined based on the position of the forward end 116 of the vortex generator 102. Thus, a disclosure of a vortex generator 102 disposed at a particular chord-wise location and/or span-wise location means that the forward end 116 of the vortex generator 102 is positioned at that location.

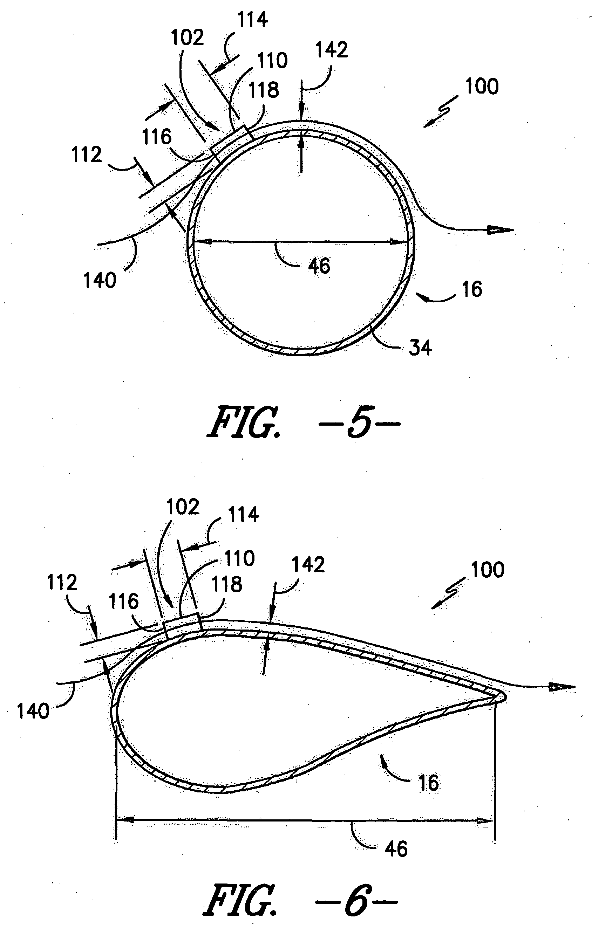

As further illustrated in FIGS. 2 through 4, each first portion 130 vortex generator 102 and each second portion 132 vortex generator 102 may be disposed between approximately 10% and approximately 40% of the local chord 46 for that vortex generator 102. It should be noted that a percentage of local chord 46 is defined for a local chord 46 with the leading edge end of the local chord 46 being 0% and the trailing edge end of the local chord 46 being 100%. It should additionally be noted that a percentage of local chord 46 is based on the chord 42 and local chord 46 being considered straight lines between the leading edge 26 and trailing edge 28, and the location of a vortex generator 102 on a surface of the rotor blade 16 being based on a generally perpendicular (when viewed in a cross-section as shown in FIGS. 5 and 6) extrusion from a location along the local chord 46. Further, as discussed, the second portion 132 may be offset chord-wise from the first portion 130. In exemplary embodiments, the first chord-wise location of the first portion 130 vortex generators 102 may be between approximately 10% and approximately 20% of the local chord 46 for each first portion 130 vortex generator 102, such as in some embodiments approximately 15% of the local chord 46 for each first portion 130 vortex generator 102. Further, in exemplary embodiments, the second chord-wise location of the second portion 132 vortex generators 102 may be between approximately 25% and approximately 35% of the local chord 46 for each second portion 132 vortex generator 102, such as in some embodiments approximately 30% of the local chord 46 for each second portion 132 vortex generator 102.

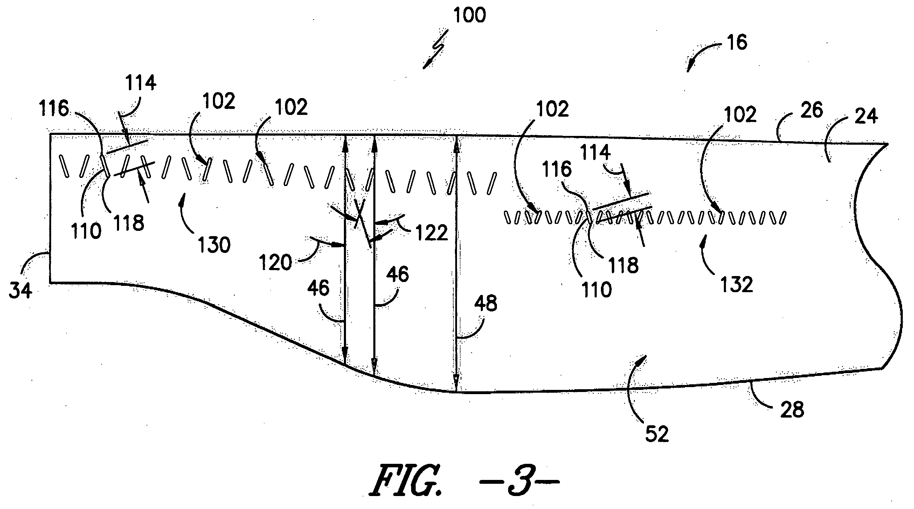

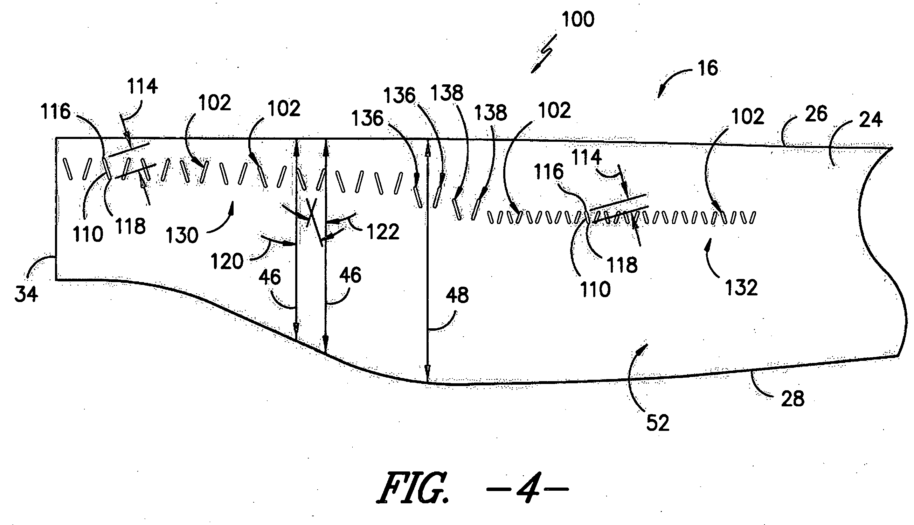

In some embodiments, the first portion 130 and second portion 132 are discrete from each other in the chord-wise direction, such that no other vortex generators 102 are between the portions 130, 132 in the span-wise or chord-wise direction and such that there is no transition between the portions 130, 132, as shown in FIGS. 2 and 3. Alternatively, however, additional vortex generators 102 may be utilized to provide a transition between the portions 130, 132. For example, as shown in FIG. 4, one or more vortex generators 102 of the plurality of vortex generators 102 may be disposed in transition locations, which may be between the first portion 130 and second portion 132 in the generally span-wise direction and between the first chord-wise location of the first portion 130 and the second chord-wise location of the second portion 132. For example, as shown, four vortex generators 102 may be disposed in transition locations. Two such first transition vortex generators 136 may be disposed at approximately 20% of the local chord 46 for those vortex generators, and two such second transition vortex generators 138 may be disposed at approximately 25% of the local chord 46 for those vortex generators. Such vortex generators 136, 138, by being located at transition locations, provide a gradual transition between the first portion 130 and second portion 132 vortex generators 102.

Referring again to FIGS. 2 through 4, in exemplary embodiments, the plurality of vortex generators 102 may be disposed within the inboard area 52. Further, in exemplary embodiments, at least a portion of the first portion 130 of vortex generators 102 may further be disposed in the span-wise direction between the root 34 and the span-wise maximum chord 48 location.

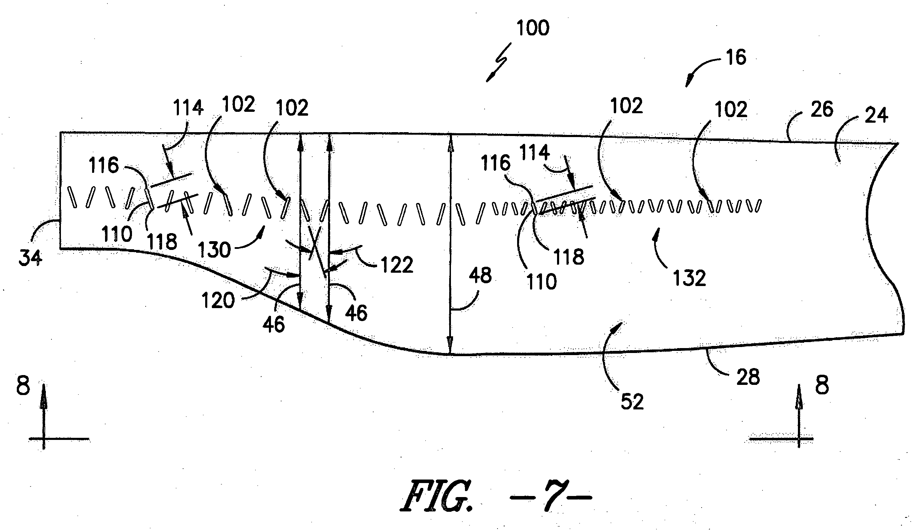

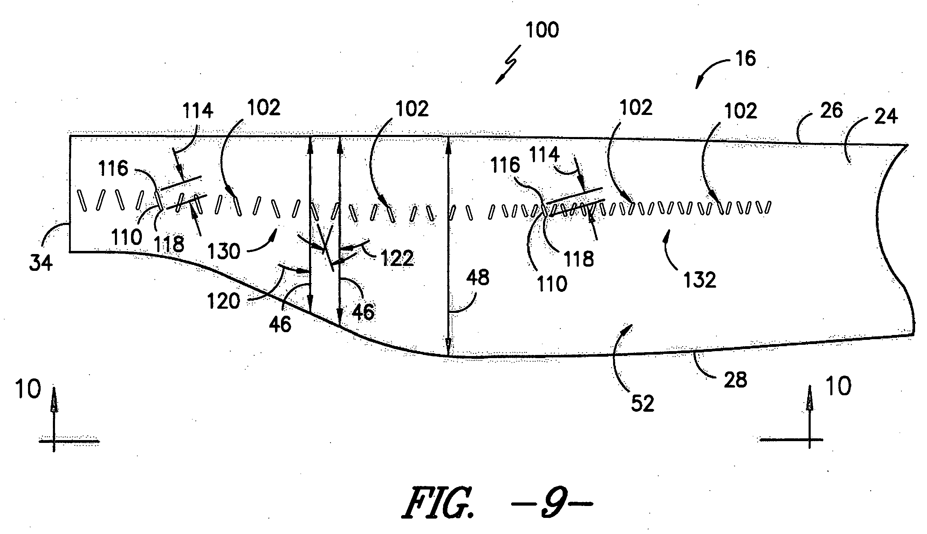

It should be noted, referring now to FIGS. 7 and 9, that the first portion 130 and second portion 132 vortex generators 102 need not necessarily be offset in the chord-wise direction. For example, in the embodiments illustrated in FIGS. 7 and 9, the first portion 130 and second portion vortex generators 102 are disposed at generally identical chord-wise locations, which may for example be a predetermined local chord-wise location.

Referring now to FIGS. 2 through 11, in some embodiments, one or more of the vortex generators 102 may advantageously be sized to increase the performance and efficiency of the rotor blade assembly 100 and wind turbine 10 in general. For example, as shown, in some exemplary embodiments, the first set 130 of vortex generators 102 may have such advantageous sizing. In particular, in some exemplary embodiments as shown, each first portion 130 vortex generator 102 may have a height 112 and a length 114 that is greater than the height 112 and the length 114 of each second portion 132 vortex generator 102. For example, in some embodiments, each first portion 130 vortex generator 102 may have a height 112 that is between approximately 1.25 and approximately 3.5 times a height 112 of each second portion 130 vortex generator 102. Additionally or alternatively, each first portion 130 vortex generator 102 may have a length 114 that is between approximately 1.25 and approximately 3.5 times a length 114 of each second portion 130 vortex generator 102.

Referring still to FIGS. 2 through 11, and in particular to the first portion 130 vortex generators 102 illustrated therein, in some embodiments, one or more vortex generators 102 may have an aspect ratio between approximately 4 and approximately 10, such as in some exemplary embodiments approximately 5. An aspect ratio of a vortex generator 102 is defined as the length 114 divided by the height 112. Such aspect ratios according to the present disclosure are substantially larger than conventional vortex generator 102 aspect ratios, and advantageously may provide improve rotor blade assembly 100 and wind turbine 10 performance and efficiency.

Additionally or alternatively, one or more vortex generators 102 may have particular heights 112 and/or lengths 114 that provide such advantageous performance and efficiency benefits. For example, a vortex generator 102 may have a height 112 between approximately 0.5% and approximately 4% of the local chord 46 for that vortex generator 102, such as between approximately 0.5% and approximately 3% of the local chord 46 for that vortex generator 102, such as between approximately 1.0% and approximately 4% of the local chord 46 for that vortex generator 102, such as between approximately 1.5% and approximately 4% of the local chord 46 for that vortex generator 102, such as between approximately 1.0% and approximately 3% of the local chord 46 for that vortex generator 102, such as between approximately 1.5% and approximately 3% of the local chord 46 for that vortex generator 102. Further, a vortex generator 102 may have a length 114 between approximately 4% and approximately 20% of the local chord 46 for that vortex generator 102, such as between approximately 7% and approximately 15% of the local chord 46 for that vortex generator 102.

Further, referring to FIGS. 5 and 6, the height 112 of a vortex generator 102 may additionally or alternatively be defined relative to a boundary layer 140 at the span-wise location of the vortex generator 102. For example, the boundary layer 140 may have a thickness, such as a local boundary layer thickness 142 at the location of the vortex generator 102, relative to the surface of the rotor blade 16. In exemplary embodiments, the local boundary layer thickness 142 may be measured at the forward end 116 of the vortex generator 102. The height 112 may be between approximately 0.5 and approximately 7 times the local boundary layer thickness 142 at the span-wise location of the vortex generator 102.

It should be understood that the above-disclosed heights and lengths are not limited to use in first portion 130 vortex generators 102, and rather may apply to any suitable vortex generators 102. As shown in FIGS. 2 through 11, however, in exemplary embodiments, one or more vortex generators 102 having an aspect ratio, height 112, and/or length 114 as discussed above may be disposed within the inboard area 52, such as in some embodiments between the root 34 and the span-wise location of the maximum chord 48.

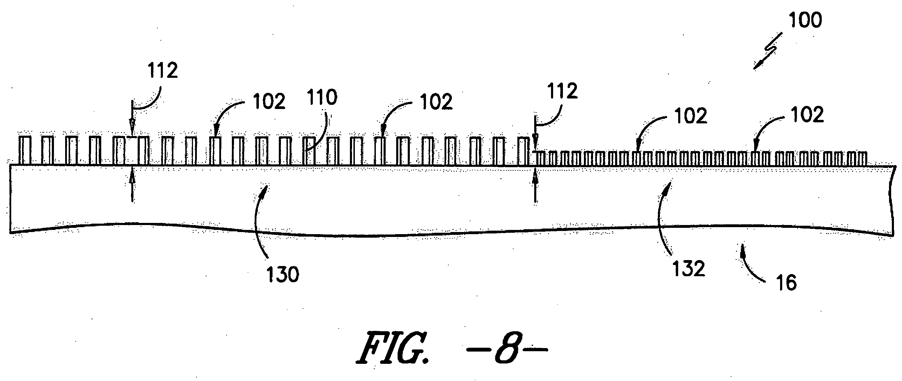

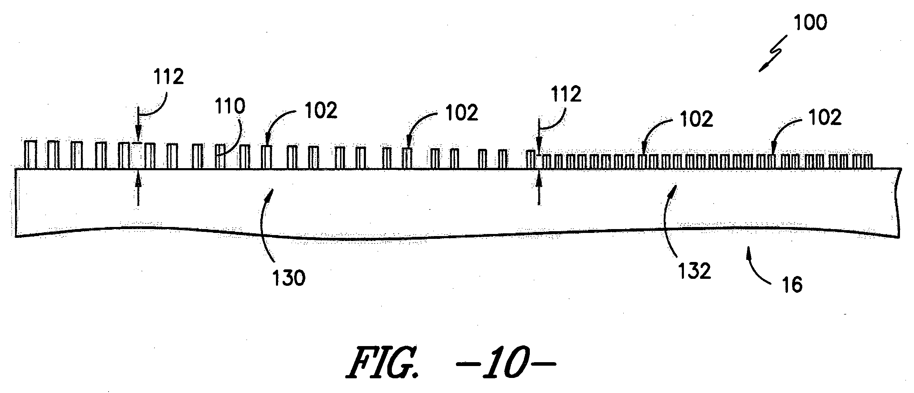

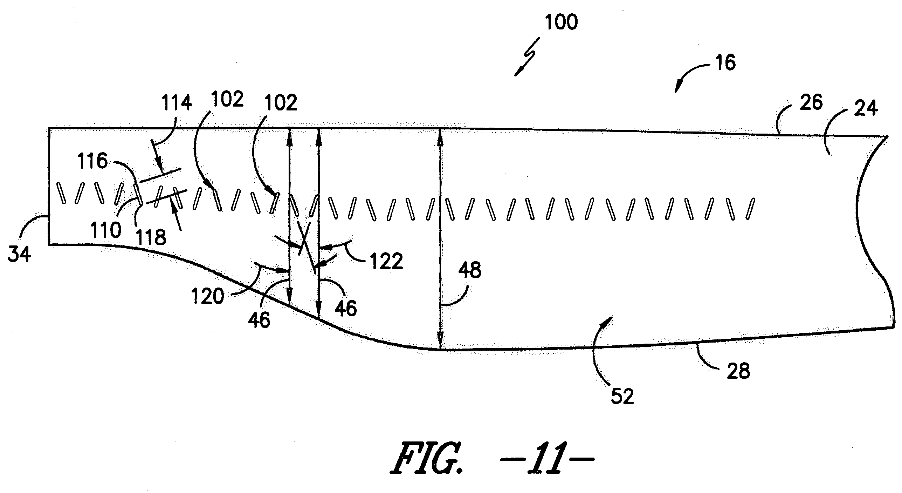

In some embodiments, as shown in FIGS. 7 and 8, the plurality of vortex generators 102 having aspect ratios, heights 112, and/or lengths 114 as discussed above each have generally identical heights 112 and/or lengths 114. FIGS. 7 and 8, for example, illustrate first portion 130 vortex generators 102 having generally identical heights 112 and lengths 114. FIG. 11 illustrates all vortex generators 102 in the row being generally identical, and thus having generally identical heights and lengths. Alternatively, in some embodiments, the plurality of vortex generators 102 having aspect ratios, heights 112, and/or lengths 114 as discussed above each have generally differing heights 112 and/or lengths 114. FIGS. 9 and 10, for example, illustrate first portion 130 vortex generators 102 having heights 112 and lengths 114 that decrease in a direction from the root 34 towards the tip 32. Alternatively, the heights 112 and lengths 114 may be based on generally identical local chord 46 percentages, and thus vary based on the size of the local chord 46 for each vortex generator 102 such that the percentage is generally constant throughout the plurality of vortex generators 102.

It should be noted that the present disclosure is further directed to vortex generator assemblies. Such assemblies include the plurality of vortex generators 102 as discussed herein, which may be arranged in a row having various orientations and/or sizes. Such vortex generators 102 may thus be arranged to be disposed at orientations as discussed herein and/or may be sized relative to a rotor blade 16 as discussed herein. A vortex generator assembly may thus include the plurality of vortex generators 102, and may further in some embodiments include one or more mounting plates. Such mounting plates may mount the vortex generators 102 on the rotor blade 16, and may further serve to locate and orient the vortex generators 102 relative to the rotor blade 16.

As discussed, vortex generators 102, rotor blade assemblies 100, and wind turbines 10 according to the present disclosure may have orientations and/or sizes that advantageously improve the performance and efficiency thereof. In some embodiments, the relative offset positioning of various portions of vortex generators 102 provides such advantageous performance characteristics. In additional or alternative embodiments, the relatively larger sizing of the vortex generators 102 as compared to conventional vortex generators provides such advantageous performance characteristics. These advantages may be particularly pronounced in embodiments wherein these vortex generators 102 are disposed in' the inboard area 52, such as in embodiments wherein at least a portion of these vortex generators 102 are between the root 34 and the span-wise maximum chord 48 location.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. A rotor blade assembly (100) for a wind turbine (10), the rotor blade assembly (100) comprising:
a rotor blade (16) having exterior surfaces defining a pressure side (22), a suction side (24), a leading edge (26), and a trailing edge (28) each extending between a tip (32) and a root (34), the rotor blade (16) further defining a span and a chord, and
a plurality of vortex generators (102) configured on at least one of the suction side (24) or the pressure side (22) and disposed within an inboard area of the rotor blade (16), the plurality of vortex generators (102) comprising a row of vortex generators (102) extending in a generally span-wise direction, the row comprising a first portion (130) of vortex generators (102) and a second portion (132) of vortex generators (102), the second portion of vortex generators (102) spaced apart from the first portion of vortex generators (102) in the span-wise direction, each first portion (130) of vortex generators (102) being disposed at a first chord-wise location, and each second portion (132) of vortex generators (102) being disposed at a second chord-wise location spaced apart from the first chord-wise location, whereby the second portion (132) is offset from the first portion (130) in both the span-wise and chord-wise directions;
wherein at least a portion of the first portion of vortex generators (102) is further disposed between the root (34) and a span-wise maximum chord location
**characterised in that** the first chord-wise location is between 10% of a local chord and 20% of a local chord, and wherein the second chord-wise location is between 25% of a local chord and 35% of a local chord; said local chord being a straight line between the leading edge (26) and the trailing edge (28) and the percentage being defined from the leading edge; and
each of the first portion (130) vortex generators (102) has a height (112) and a length that are greater than a height and a length of each of the second portion vortex generators (132).

2. The rotor blade assembly (100) of claim 1, wherein the first chord-wise location is approximately 15% of a local chord and the second chord-wise location is approximately 30% of a local chord.

3. The rotor blade assembly (100) of claim 1 or claim 2, wherein the plurality of vortex generators (102) further comprises at least one vortex generator (102) disposed in a transition location between the first portion and the second portion in the generally span-wise direction and between the first chord-wise location and the second chord-wise location.

4. The rotor blade assembly (100) of claim 3, wherein the plurality of vortex generators (102) comprises two vortex generators disposed in transition locations, a first vortex generator of the two vortex generators (102) disposed at approximately 20% of a local chord and a second vortex generator of the two vortex generators (102) disposed at approximately 25% of a local chord.

5. The rotor blade assembly (100) of any preceding claim, wherein each of the plurality of vortex generators (102) comprises a fin (110) extending at an angle relative to the local chord.

6. The rotor blade assembly (100) of any preceding claim, wherein each of the plurality of vortex generators (102) has an aspect ratio between approximately 4 and approximately 10.

7. The rotor blade assembly (100) of any preceding claim, wherein each of the plurality of vortex generators (102) has a height between approximately 0.5% and approximately 4% of the local chord.

8. The rotor blade assembly (100) of any preceding claim, wherein each of the plurality of vortex generators (102) has a height between approximately 0.5 and approximately 7 times a local boundary layer thickness at a span-wise location of the first portion vortex generator (102):

9. The rotor blade assembly (100) of any preceding claim, wherein each of the plurality of vortex generators (102) has a length between approximately 4% and approximately 20% of the local chord.

10. A wind turbine (10), comprising:
a tower (12);
a nacelle (14) mounted on the tower (12); and
a plurality of rotor blades (16), each of the plurality of rotor blades comprising a rotor blade assembly according to any one of claims 1 to 9.

## Patentansprüche

1. Rotorblattanordnung (100) für eine Windturbine (10), wobei die Rotorblattanordnung (100) umfasst:
ein Rotorblatt (16) mit äußeren Oberflächen, die eine Druckseite (22), eine Saugseite (24), eine Vorderkante (26) und eine Hinterkante (28) definieren, welche sich jeweils zwischen einer Spitze (32) und einer Wurzel (34) erstrecken, wobei das Rotorblatt (16) ferner eine Spannweite und eine Profilsehne definiert, und
eine Vielzahl von Wirbelerzeugern (102), die an mindestens einer aus der Gruppe umfassend die Saugseite (24) und die Druckseite (22) ausgebildet ist und
innerhalb einer inneren Fläche der Rotorblatts (16) angeordnet ist, wobei die Vielzahl von Wirbelerzeugern (102) eine Reihe von Wirbelerzeugern (102) umfasst, die sich im Allgemeinen in einer spannweitenweisen Richtung erstreckt, wobei die Reihe einen ersten Abschnitt (130) von Wirbelerzeugern (102) und
einen zweiten Abschnitt (132) von Wirbelerzeugern (102) umfasst, wobei der zweite Abschnitt von Wirbelerzeugern (102) von dem ersten Abschnitt von Wirbelerzeugern (102) in der spannweitenweisen Richtung beabstandet ist, wobei jeder erste Abschnitt (130) von Wirbelerzeugern (102) an einer ersten profilsehnenweisen Position angeordnet ist und jeder zweite Abschnitt (132) von Wirbelerzeugern (102) an einer zweiten profilsehnenweisen Position, die von der ersten profilsehnenweisen Position beabstandet ist, angeordnet ist, wodurch der zweite Abschnitt (132) von dem ersten Abschnitt (130) sowohl in der spannweitenweisen Richtung als auch in der profilsehnenweisen Richtung versetzt ist;
wobei mindestens ein Abschnitt des ersten Abschnitts von Wirbelerzeugern (102) ferner zwischen der Wurzel (34) und einer spannweitenweisen Position mit maximaler Profilsehne angeordnet ist, **dadurch gekennzeichnet, dass** die erste profilsehnenweise Position zwischen 10% einer lokalen Profilsehne und 20% einer lokalen Profilsehne ist, und wobei die zweite profilsehnenweise Position zwischen 25% einer lokalen Profilsehne und 35% einer lokalen Profilsehne ist; wobei die lokale Profilsehne eine gerade Linie zwischen der Vorderkante (26) und der Hinterkante (28) ist und der Prozentsatz von der Vorderkante aus definiert ist; und
jeder der Wirbelerzeuger (102) des ersten Abschnitts (130) eine Höhe (112) und eine Länge (114) aufweist, die größer als eine Höhe und eine Länge jedes der Wirbelerzeuger des zweiten Abschnitts (132) sind.

2. Rotorblattanordnung (100) nach Anspruch 1, wobei die erste profilsehnenweise Position etwa 15% einer lokalen Profilsehne und die zweite profilsehnenweise Position etwa 30% einer lokalen Profilsehne ist.

3. Rotorblattanordnung (100) nach Anspruch 1 oder Anspruch 2, wobei die Vielzahl von Wirbelerzeugern (102) ferner mindestens einen Wirbelerzeuger (102) umfasst, der in einer Übergangsposition zwischen dem ersten Abschnitt und dem zweiten Abschnitt in der im Allgemeinen spannweitenweisen Richtung und zwischen der ersten profilsehnenweisen Position und der zweiten profilsehnenweisen Position angeordnet ist.

4. Rotorblattanordnung (100) nach Anspruch 3, wobei die Vielzahl von Wirbelerzeugern (102) zwei Wirbelerzeuger, die in Übergangspositionen angeordnet sind, umfasst, wobei ein erster Wirbelerzeuger der zwei Wirbelerzeuger (102) bei etwa 20% einer lokalen Profilsehne angeordnet ist und ein zweiter Wirbelerzeuger der zwei Wirbelerzeuger (102) bei etwa 25% einer lokalen Profilsehne angeordnet ist.

5. Rotorblattanordnung (100) nach einem beliebigen vorhergehenden Anspruch, wobei jeder aus der Vielzahl von Wirbelerzeugern (102) eine Finne (110) umfasst, die sich in einem Winkel relativ zu der lokalen Profilsehne erstreckt.

6. Rotorblattanordnung (100) nach einem beliebigen vorhergehenden Anspruch, wobei jeder aus der Vielzahl von Wirbelerzeugern (102) ein Seitenverhältnis zwischen etwa 4 und etwa 10 umfasst.

7. Rotorblattanordnung (100) nach einem beliebigen vorhergehenden Anspruch, wobei jeder aus der Vielzahl von Wirbelerzeugern (102) eine Höhe zwischen etwa 0,5% und etwa 4% der lokalen Profilsehne aufweist.

8. Rotorblattanordnung (100) nach einem beliebigen vorhergehenden Anspruch, wobei jeder aus der Vielzahl von Wirbelerzeugern (102) eine Höhe zwischen etwa dem 0,5-Fachen und etwa dem 7-Fachen einer lokalen Grenzschichtdicke an einer spannweitenweisen Position des Wirbelerzeugers (102) des ersten Abschnitts aufweist.

9. Rotorblattanordnung (100) nach einem beliebigen vorhergehenden Anspruch, wobei jeder aus der Vielzahl von Wirbelerzeugern (102) eine Länge zwischen etwa 4% und etwa 20% der lokalen Profilsehne aufweist.

10. Windkraftanlage (10), umfassend:
einen Turm (12);
eine Gondel (14), die an dem Turm (12) angebracht ist; und
eine Vielzahl von Rotorblättern (16), wobei jedes aus der Vielzahl von Rotorblättern eine Rotorblattanordnung nach einem beliebigen der Ansprüche 1 bis 9 umfasst.

## Revendications

1. Ensemble de pale de rotor (100) pour une éolienne (10), l'ensemble de pale de rotor (100) comprenant :
une pale de rotor (16) ayant des surfaces externes définissant un côté de refoulement (22), un côté d'aspiration (24), un bord d'attaque (26) et un bord de fuite (28), chacun s'étendant entre une pointe (32) et une emplanture (34), la pale de rotor (16) définissant en outre une envergure et une corde, et
une pluralité de générateurs de tourbillons (102) configurés sur au moins l'un du côté d'aspiration (24) ou du côté de refoulement (22) et disposés dans une zone intérieure de la pale de rotor (16), la pluralité de générateurs de tourbillons (102) comprenant une rangée de générateurs de tourbillons (102) s'étendant dans le sens général de l'envergure, la rangée comprenant une première partie (130) de générateurs de tourbillons (102) et une seconde partie (132) de générateurs de tourbillons (102), la seconde partie de générateurs de tourbillons (102) étant espacée de la première partie de générateurs de tourbillons (102) dans le sens de l'envergure, chaque première partie (130) de générateurs de tourbillons (102) étant disposée à un premier emplacement dans le sens de la corde et chaque seconde partie (132) de générateurs de tourbillons (102) étant disposée dans un second emplacement dans le sens de la corde espacé du premier emplacement dans le sens de la corde, moyennant quoi la seconde partie (132) est décalée de la première partie (130) à la fois dans le sens de l'envergure et dans le sens de la corde ; dans lequel au moins une partie de la première partie de générateurs de tourbillons (102) est en outre disposée entre l'emplanture (34) et un emplacement maximum de la corde dans le sens de l'envergure ; **caractérisé en ce que** :
le premier emplacement dans le sens de la corde se situe entre 10 % d'une corde locale et 20 % d'une corde locale et dans lequel le second emplacement dans le sens de la corde se situe entre 25 % d'une corde locale et 35 % d'une corde locale ; ladite corde locale étant une ligne droite entre le bord d'attaque (26) et le bord de fuite (28) et le pourcentage étant défini à partir du bord d'attaque ; et chacun des générateurs de tourbillons (102) de la première partie (130) a une hauteur (112) et une longueur (114) qui sont supérieures à la hauteur et à la longueur de chacun des générateurs de tourbillons (132) de la seconde partie.

2. Ensemble de pale de rotor (100) selon la revendication 1, dans lequel le premier emplacement dans le sens de la corde est approximativement de 15 % d'une corde locale et le second emplacement dans le sens de la corde est approximativement de 30 % d'une corde locale.

3. Ensemble de pale de rotor (100) selon la revendication 1ou la revendication 2, dans lequel la pluralité de générateurs de tourbillons (102) comprennent en outre au moins un générateur de tourbillons (102) disposé dans un emplacement de transition entre la première partie et la seconde partie dans le sens général de l'envergure et entre le premier emplacement dans le sens de la corde et le second emplacement dans le sens de la corde.

4. Ensemble de pale de rotor (100) selon la revendication 3, dans lequel la pluralité de générateurs de tourbillons (102) comprennent deux générateurs de tourbillons disposés dans des emplacements de transition, un premier générateur de tourbillons des deux générateurs de tourbillons (102) étant disposé à environ 20 % d'une corde locale et un second générateur de tourbillons des deux générateurs de tourbillons (102) étant disposé à environ 25 % d'une corde locale.

5. Ensemble de pale de rotor (100) selon l'une quelconque des revendications précédentes, dans lequel chacun de la pluralité de générateurs de tourbillons (102) comprend une ailette (110) s'étendant sous un certain angle par rapport à la corde locale.

6. Ensemble de pale de rotor (100) selon l'une quelconque des revendications précédentes, dans lequel chacun de la pluralité de générateurs de tourbillons (102) a un rapport d'aspect entre environ 4 et environ 10.

7. Ensemble de pale de rotor (100) selon l'une quelconque des revendications précédentes, dans lequel chacun de la pluralité de générateurs de tourbillons (102) a une hauteur entre environ 0,5 % et environ 4 % de la corde locale.

8. Ensemble de pale de rotor (100) selon l'une quelconque des revendications précédentes, dans lequel chacun de la pluralité de générateurs de tourbillons (102) a une hauteur entre environ 0,5 et environ 7 fois l'épaisseur d'une couche limite locale à un emplacement dans le sens de l'envergure du générateur de tourbillons (102) de la première partie.

9. Ensemble de pale de rotor (100) selon l'une quelconque des revendications précédentes, dans lequel chacun de la pluralité de générateurs de tourbillons (102) a une longueur entre environ 4 % et environ 20 % de la corde locale.

10. Eolienne (10) comprenant :
une tour (12) ;
une nacelle (14) montée sur la tour (12) ; et
une pluralité de pales de rotor (16), chacune de la pluralité de pales de rotor comprenant un ensemble de pale de rotor selon l'une quelconque des revendications 1 à 9.
